# EUROPEAN PATENT APPLICATION

(11) **EP 4 800 574 A1**
(43) Date of publication of application: **02.09.2026**
(21) Application number: 26159826.2
(22) Date of filing: 20.02.2026
(51) Int. Cl.: G06F 16/9032, G06F 16/9536

(54) **RELATED QUERY ENGAGEMENT ENHANCEMENT**

(30) Priority: 27.02.2025 US 202563764512 P; 01.08.2025 US 202519288425
(71) Applicant: eBay Inc., San Jose, CA 95125 (US)
(72) Inventor: NGUYEN, Hung Sy, SAN JOSE, 95125 (US); LIANG, Yan, SAN JOSE, 95125 (US); YETUKURI, Jayanth Kumar, SAN JOSE, 95125 (US); KHAN, Ishita Kamal, SAN JOSE, 95125 (US); WU, Zhe, SAN JOSE, 95125 (US); NGUYEN, Ha Phuong, SAN JOSE, 95125 (US); YU, Jiang, SAN JOSE, 95125 (US)
(74) Representative: Müller-Boré & Partner Patentanwälte PartG mbB

(57) **Abstract**

Methods, systems, and computer media are disclosed for generating enhanced query suggestions by integrating collaborative filtering, embedding-based similarity, and large language model generation techniques. The system accesses a query keyword and produces three types of suggestions: one derived from historical user behavior, one based on semantic similarity using embeddings, and one generated by an LLM. These suggestions are stored in association with the query keyword and may be retrieved for future queries. For new or previously unseen queries, the system generates a semantic hash and identifies the most similar stored keyword using hash comparison or embedding similarity. The technology improves upon traditional collaborative filtering by enabling relevant and diverse suggestions even for low-frequency or non-head queries. This approach enhances user engagement and search effectiveness on e-commerce platforms by aligning suggestions more closely with user intent, regardless of historical data availability. The system supports scalable, real-time performance across large query datasets.

## Description

### BACKGROUND

Search systems often employ query suggestions to refine and expand queries, offering relevant alternative or related search terms that improve search result relevance. Traditional systems often employ collaborative filtering techniques, which analyze historical user behavior to identify patterns and generate suggestions based on prior user interactions with similar queries. Collaborative filtering is particularly effective for high-frequency or "head" queries, where sufficient user data exists to support meaningful recommendations. However, this approach becomes less effective for low-frequency or "non-head" queries, which lack the volume of historical data necessary to generate accurate or diverse suggestions.

### SUMMARY

Various aspects of the technology described herein are generally directed to systems, methods, and computer storage media for, among other things, generating query suggestions using a combination of collaborative filtering, embedding-based models, and language model-based generation. The disclosed techniques improve the quality and relevance of query suggestions by utilizing both historical user behavior and semantic understanding derived from large language models. Traditional systems often rely on collaborative filtering, which performs well for frequently searched terms but struggles with less common queries due to limited historical data. The technology discussed herein addresses this issue by incorporating semantic understanding through embedding models and generative capabilities of large language models.

In one embodiment, a computer-implemented method includes accessing a query keyword from a plurality of query keywords, generating a collaborative filtering suggestion based on historical user search data, generating an embedding-based suggestion using an embedding model, and generating a language model-based suggestion using a generative language model. The embodiment may further include storing each of the generated suggestions in association with the query keyword in a data structure on a computer storage medium. In another embodiment, a system includes a processor and a memory storing instructions that, when executed, cause the system to perform the steps of the method described above. The system may also determine a closest matching keyword for a new or reused query and retrieve the associated suggestions accordingly. In yet another embodiment, a non-transitory computer-readable medium stores instructions that, when executed by one or more processors, cause a computing system to access a query keyword, generate collaborative filtering, embedding-based, and language model-based suggestions, and store the suggestions in association with the query keyword. The disclosed technology improves upon existing technologies by enabling more accurate, diverse, and semantically relevant query suggestions. This is particularly beneficial for non-head queries, where traditional collaborative filtering methods are insufficient. By integrating LLM-based techniques, the technology enhances query suggestions that facilitate improved result relevance.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

The technology described herein is described in detail below with reference to the attached drawing figures, wherein:
FIG. 1A illustrates a first example flow for generating and storing query suggestions, in accordance with aspects of the technology described herein.
FIG. 1B illustrates an example query suggestion output, in accordance with aspects of the technology described herein;
FIG. 2A is a block diagram of a query suggestion system computing environment, in accordance with aspects of the technology described herein;
FIG. 2B provides a flow diagram for generating, querying, and outputting query suggestions, in accordance with aspects of the technology described herein;
FIG. 3 provides an exemplary method for generating and storing query suggestions, in accordance with aspects of the technology described herein;
FIG. 4 provides a block diagram of an exemplary item listing system computing environment suitable for use in implementing aspects of the technology described herein;
FIG. 5 provides a block diagram of an exemplary distributed computing environment suitable for use in implementing aspects of the technology described herein; and
FIG. 6 is a block diagram of an exemplary computing environment suitable for use in implementing aspects of the technology described herein.

### DETAILED DESCRIPTION

### OVERVIEW

An item listing system and platform support storing items (products or assets) in item databases and providing a search system for receiving queries and identifying search result items based on the queries. An item (e.g., physical item or digital item) refers to a product or asset that is provided for listing on an item listing platform. Search systems support identifying, for received queries, result items from item databases. Item databases can specifically be for content platform or item listing platforms such as EBAY content platform, developed by EBAY INC., of San Jose, California. Item listing systems process incredible quantities of queries and transaction requests on a daily basis for incredible quantities of products listed on their systems. Conventionally, item listing systems store products based on user descriptions or metadata within images of products being uploaded. But the metadata and descriptions can only provide so much information when utilized later on in future search.

Millions upon millions of items can be listed on conventional item listing platforms. As a result, search results returned by search systems often do not match the intent of search queries, which leads to users consistently refining their own search terms. This results in multiple searches each of which may not result in the item the user is actually searching for. For instance, sometimes users are not completely sure of the name of an item or brand that they are seeking. To address this issue, search systems often provide query suggestions in response to search queries to assist users in formulating search queries that return relevant search results. Providing query suggestions increases the chance that a user will find the item they are looking for without having to purposely refine their search query through repeated unsuccessful queries. As such, these query suggestions reduce the number of search queries processed, which, in turn, reduces the workload on the hardware and software components of item listing systems. These systems can process millions of queries per minute. So any reduction in failed searches and any increase in the efficiency and accuracy of searches can heavily impact the workload of the item listing system.

There are several typical forms of search query suggestions. One of the most common being collaborative filtering. Collaborative filtering is a technique that generates suggestions based on the collective behavior of users. In the context of search query recommendation, collaborative filtering analyzes historical user interactions-such as search queries, clicks, and reformulations-to identify patterns and infer relationships between different queries. When a user enters a query, the system can recommend related queries that were commonly searched by other users who entered similar queries in the past. This technique is particularly effective for high-frequency or "head" queries, where a substantial volume of user interaction data is available. For example, if a large number of users who searched for "wireless headphones" also searched for "Bluetooth earbuds," the system may recommend the latter as a related query. These recommendations are typically derived from query co-occurrence statistics or user-session-based associations and are stored in a cache or lookup structure for efficient retrieval.

However, collaborative filtering has inherent limitations. It relies heavily on the availability of sufficient historical data to identify meaningful associations. For low-frequency or "non-head" queries-those that are more specific, unique, or newly emerging-there may be insufficient user behavior data to support reliable recommendations. This means that there has not been enough historical user interactions to create broad enough of a data set to be able to solely rely on collaborative filtering. This can happen in instances of new products, or more niche product categories. This can occur more commonly on item listing systems such as eBay where individuals may upload for sale their own items. As a result, collaborative filtering systems often fail to provide relevant or diverse suggestions for these queries, leading to a suboptimal user experience.

The present disclosure addresses these limitations by augmenting collaborative filtering with two additional, complementary techniques: embedding-based similarity and language model-based generation. Instead of relying solely on collaborative filtering, embodiments described herein generate three forms of query suggestions and stores each within a data structure in association with its related query keyword. Embedding models, such as those derived from fine-tuned Bidirectional Encoder Representations from Transforms (BERT) architectures, enable the system to understand the semantic relationships between queries by representing them in a high-dimensional vector space. Through the use of an embedding-based suggestion engine, embodiments of the disclosure identify and suggest queries that are contextually similar, even in the absence of direct historical co-occurrence. The embedding-based suggestion engine may generate a contextual embedding which may be stored in a suggestion repository. Additionally, a language model-based suggestion can utilize generative language models to produce novel, intent-aligned suggestions based on the linguistic structure and meaning of the input query.

The resultant suggestions generated by the collaborative filtering-based suggestion engine, embedding-based suggestion engine, and the language model-based suggestion engine can be stored in a data structure in association with the root keyword. By integrating collaborative filtering with these additional techniques, the relevance, diversity, and coverage of query suggestions can be significantly enhanced. This hybrid approach ensures that users receive high-quality recommendations not only for head queries but also for non-head queries, thereby improving engagement, satisfaction, and commercial outcomes on e-commerce platforms.

For example, an item listing system can have a database of query keywords submitted by users over the course of time. The system can utilize these previously submitted query keywords to generate a number of query suggestions for each of these previous query keywords. Conventionally, these suggestions would be based on a collaborative filtering technique wherein the system determines similar keywords based on historical user interactions. These collaborative filtering suggestions could have been stored in a data structure in association with the related keyword. But, instead of stopping with collaborative filtering suggestions, embodiments of this disclosure conduct two additional suggestion techniques, one generated utilizing embedding techniques, and one generated based on language learning model techniques. As such, three categories of suggestions may be generated for every query keyword. Each of these sets of query keyword suggestions can be stored in a data structure in association with the query keyword. This allows for the system to output the query keyword suggestions for each category by querying the data structure at the time the keyword is entered. The system can then in an efficient and timely manner output the suggestions from each category. If a user submits a query for laptop, the system will query the data structure for the term laptop. If found, the system will then output a collaborative filtering suggestion, an embedding-based suggestion, and a language model-based suggestion. If the term is a less common keyword that is not found in the data structure, the system can generate a hash of the less common keyword. This is then compared against the keywords stored within the data structure to find the stored keyword that is the most similar to the less common keyword. Then the collaborative filtering suggestion, embedding-based suggestion, and language model-based keyword for the keyword most similar to the less common keyword.

### DESCRIPTION OF TECHNICAL SOLUTION

At a high level, the query suggestion engine provides for an improvement to search engine and item listing technologies by timely providing robust query suggestions that may be utilized to reduce the number of failed queries that a user may provide. This is accomplished by utilizing three separate suggestion generation engines, the collaborative filtering-based suggestion engine, the embedding-based suggestion engine, and the language model-based suggestion engine to generate three categories of query keyword suggestions. Each category of suggestions are stored in a data structure such as the suggestion repository so that they may be output when a user enters a keyword stored within the suggestion repository. By implementing each of these three engines, and proactively generating this suggestion repository, the query suggestion engine allows the item listing system to timely output a number of robust query suggestions without impacting the bandwidth or processing speed of the search engine utilized by the item listing system.

This is particularly beneficial for large item listing systems such as eBay. Thousands upon thousands of searches can be submitted on these item listing systems. Preprocessing keywords to generate this suggestion repository allows the item listing system to dedicate resources to processing these queries themselves as they must be utilized to query millions of items stored on their system. And providing the robust query suggestions allows users to better craft and update queries prior to submission. This reduces the number of false or inaccurate queries that users submit. This reduces the overall load of queries submitted, reducing the bandwidth requirement and processing requirements for the item listing system.

### EXAMPLE SYSTEM AND RESOURCES

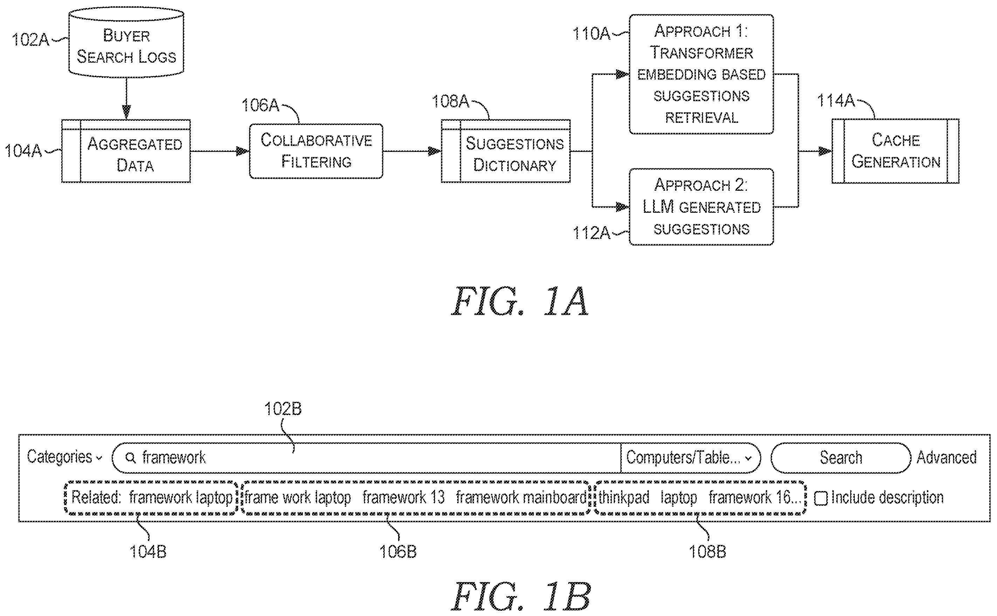

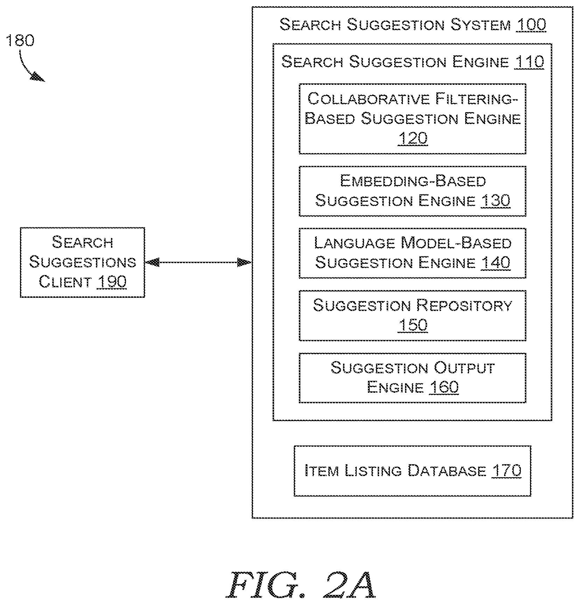

Aspects of the technical solution can be described by way of examples and with reference to FIGS. 1A - 1B. FIG. 1A illustrates a first example flow for generating and storing query suggestions. This example flow may be implemented on computing resources and a computing environment as described in relation to FIGs. 2A and 4-6, and FIGs. 1A-1B are discussed with relation to the components of FIGs. 2A and 4-6. In embodiments, an item listing system may have or generate a database of buyer search logs 102A. These buyer search logs 102A may be stored in association with the item listing database 170 of FIG. 2A. The query suggestion system 100 may utilize these buyer search logs 102A to generate a set of aggregated data 104A. This set of aggregated data 104A may comprise data that represents various aspects of the buyer search logs 102A. For example, the aggregated data 104A may represent user identification numbers, click through rates, purchases made, queries made, and the results of those queries. As such, the aggregated data 104A may be data that represents all aspects of previous buyer searches and the results of those searches. The aggregated data 104A may be in a format that can be utilized by a machine learning model to generate predictions and insights from the buyer search logs 102A.

For example, they may be utilized to conduct collaborative filtering 106A. A collaborative filtering-based suggestion engine 120 such as that described in reference to FIG. 2A may utilize the aggregated data 104A derived from the buyer search logs 102A to generate a suggestions dictionary 108A. For example, the collaborative filtering-based suggestion engine 120 may determine from the aggregated data 104A that a particular user had several search sessions. In a first session they searched for wireless headphones and then eventually searched for Bluetooth earbuds. The collaborative filtering-based suggestion engine 120 may use this information to generate, for example, a co-occurrence matrix where each cell represents how often two queries appear together in the same session. This matrix can capture the relationship between queries based on user behavior for example by calculating Cosine similarities., Jaccard indexes or Pearson correlations. In embodiments, this co-occurrence matrix may be included in the aggregated data 104A as part of the process of generating the aggregated data 104A from the buyer search logs 102A.

In embodiments, the aggregated data 104A may be used to train a machine learning model as part of the collaborative filtering-based suggestion engine 120. Namely, the collaborative filtering-based suggestion engine 120 may incorporate a machine learning model that is trained to learn latent representations of queries. Any number or type of machine learning model may be utilized in the generation of the collaborative filtering-based suggestions such as matrix factorization, neural collaborative filtering, or graph neural networks. Once trained, the model can take a new or existing query input, retrieve the most similar queries from the buyer search logs 102A and return these as collaborative filtering-based suggestions. As such, the types of suggestions generated by the collaborative filtering-based suggestion engine 120 are based on previous user interactions.

These collaborative filtering-based suggestions may be stored in a suggestions dictionary 108A and utilized in approach 1: transformer embedding-based suggestions retrieval 110A and approach 2: LLM generated suggestions 112A. In embodiments, approach 1 and approach 2 can be accomplished utilizing the aggregated data 104A without the need to utilize the suggestions dictionary 108A. In embodiments, approach 1 is performed by the embedding-based suggestion engine 130 and approach 2 is performed by the language model-based suggestion engine 140 discussed in relation to FIG. 2A. Each of these approaches and their associated engines are used to enhance query suggestions by generating different types of suggestions that a user may find helpful in crafting queries that are more likely to result in less queries and higher click through rate for purchases.

Beginning with Approach 1: transformer embedding-based suggestions retrieval 110A, the embedding-based suggestion engine 130 may generate embeddings from keywords such as those stored in the aggregated data 104A, or from the collaborative filtering data structured in the suggestions dictionary 108A. Embeddings are numerical representations of textual data, such as query keywords, that capture semantic meaning of such data in a high-dimensional vector space. As discussed herein, the embedding-based suggestion engine 130 may comprise a machine learning model that is pre-trained to generate textual embeddings from search query keywords. An example model is the Bidirectional Encoder Representations from Transformers (BERT) model. An embedding may be generated from aggregated data 104A by tokenizing the query data housed in the aggregated data 104A and processing this tokenized data by the machine learning model. The model outputs a dense vector that encodes the semantic features of the query data. In an embodiment, the query suggestion engine 110 may perform a nearest neighbor search in the embedding space to find stored query embeddings that are most similar to the input query. The most similar queries may then be stored in association with the input query keyword, for example, in the suggestion repository 150. This allows the query suggestion engine 110 to provide semantically related suggestions, even if a query has little to no historical user data.

Moving to approach 2: LLM generated suggestions 112A, the language model-based suggestion engine 140 may generate language model-based suggestions utilizing query data such as that stored in the aggregated data 104A, or from the collaborative filtering data structured in the suggestions dictionary 108A. In embodiments, a large language model (LLM) may be utilized by the language model-based suggestion engine 140 to generate query suggestions that are semantically and contextually aligned with a user's input query. A large language model, may be pre-trained on natural language text and specifically trained on domain-specific language such as historical e-commerce search queries or data such as the aggregated data 104A or suggestions dictionary 108A. Such a pre-trained model that is incorporated into the language model-based suggestion engine 140 may be capable of understanding linguistic patterns, contextual relationships, and user intent based on the structure and content of the input.

To generate a language model-based suggestion, the language model-based suggestion engine 140 accesses query data as part of a prompt to the language mode. In embodiments, the prompt includes the query keyword alone, and in additional or alternative embodiments, the prompt may include the query keyword, query data associated with the query keyword and additional structural context for the prompt. An example prompt being, "generate alternative search queries for: [query keyword]." The language model-based suggestion engine 140 processes the prompt to generate a language model-based suggestion that incorporates context linguistic semantics. These language model-based suggestions are not limited to historical user or query data and therefore can provide robust suggestions for non-head queries with less related historical data.

An example input for the language model-based suggestion engine 140 may be "wireless earbuds for running" or "provide similar queries for an online retailer for wireless earbuds for running." The language model-based suggestion engine 140 may use this input data to output semantically related language model-based suggestions such as "best wireless earbuds for workouts," "sweatproof Bluetooth earbuds," running headphones with secure fit," "sports earbuds with long battery life." The incorporation of a language model as part of the language model-based suggestion engine 140 enables the query suggestion system 100 to generate semantically relevant and robust query suggestions without needing to rely on historical user data. The language model-based suggestion engine 140 can utilize even a single instance of a search keyword to generate these robust and semantically relevant query suggestions, addressing limitations in conventional collaborative filtering based suggestions.

Once the collaborative filtering-based suggestion, embedding-based suggestion, and the language model-based suggestion have been generated, the query suggestion engine 110 may perform the step of cache generation 114A to generate a data structure in which each of these suggestions may be stored in association with the related search keyword. In embodiments, this generated cache may be stored in a data structure such as the suggestion repository 150. Or the item listing database 170. The query suggestion engine 110 may utilize this cache to output the query suggestions. In embodiments, the suggestion output engine 160 generates, transmits, or causes display of the query suggestions generated as discussed throughout.

FIG. 1B illustrates an example query suggestion output, in accordance with aspects of the technology described herein. The example query suggestion output may be generated by the suggestion output engine 160 of the query suggestion engine 110. A user may enter a search keyword, for example through the utilization of a query suggestions client 190, into a search bar 102B. Upon receiving the search keyword, the query suggestion engine 110 may query the data structure of query suggestions, such as the suggestion repository 150, to output several sets of query suggestions. In examples, the suggestion area 104B may display the collaborative filtering-based suggestion, the suggestion area 106B may display the embedding-based suggestion, and the suggestion area 108B may display the language model-based suggestion. The suggestion output engine 160 may cause display of each of the suggestions on any area of a graphical user interface, and the suggestion areas are simply provided as an example.

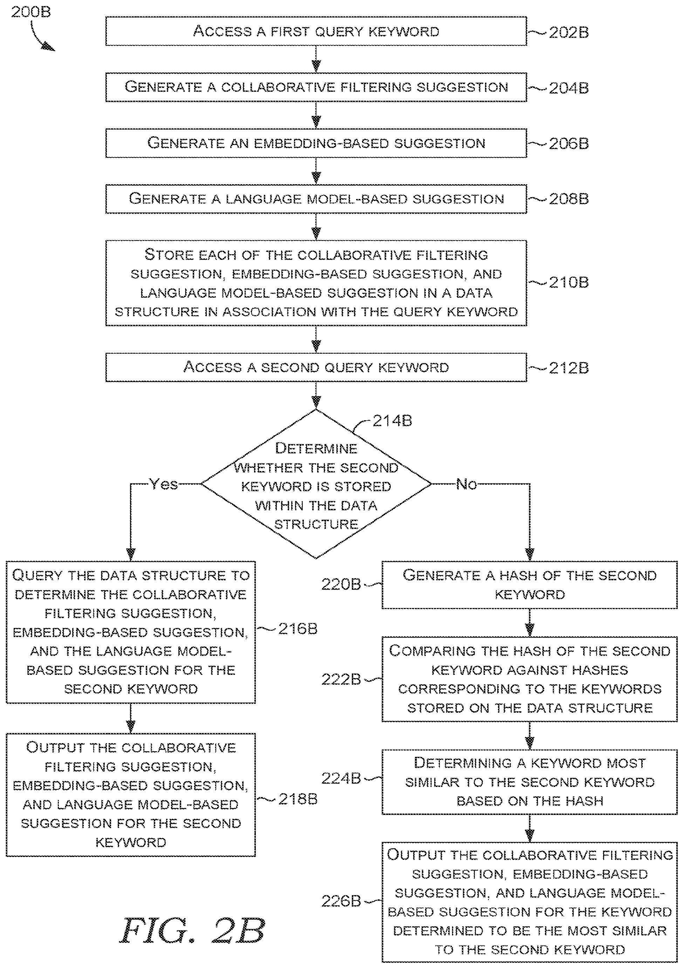

By providing these various query suggestions, the query suggestion engine 110 provides for multiple robust query suggestions, even when a provided keyword is less common or has little to no historical user data. Any number of suggestions for the three types of suggestions may be caused to display. For example, if the search keyword is a non-head keyword with little to no historical data, the suggestion output engine 160 may cause display of only one collaborative filtering-based suggestion such as in suggestion area 104B while providing multiple suggestions for the embedding-based suggestion and language model-based suggestion. Additionally, as discussed in relation to FIG. 2B, if the keyword provided in search bar 102B is not included in the suggestion repository 150, the query suggestion engine 110 may hash the keyword to find a most similar keyword stored in the suggestion repository 150 and output the suggestions associated with the keyword determined to be the most similar based on the hashing.

FIG. 2A is a block diagram of a query suggestion system computing environment 180, in accordance with aspects of the technology described herein. The query suggestion system computing environment 180 may comprise a query suggestions client 190. The query suggestions client 190 may be a user device of portal through which a user may interact with the query suggestion system 100. This may include a user inputting a search keyword, or may be an administrative user utilizing the query suggestion system 100 to generate and store the query suggestions. As such, the query suggestions client 190 may receive interactions at a graphical user interface of a user device, and provide said interactions to the query suggestion system 100 to perform the steps discussed in relation to FIGs. 1A, 1B, and 2B.

The query suggestion system computing environment 180 may additionally or alternatively comprise the query suggestion system 100 which may include the query suggestion engine 110 and the item listing database 170. The item listing database 170 may comprise data associated with the items stored and searchable by the item listing system as well as previously entered search keywords and user interaction data. In additional or alternative embodiments may store the suggestions generated by the query suggestion engine 110. The query suggestion engine 110 may access the keyword data structured in the item listing database 170 to generate various suggestions for said stored keyword data. The collaborative filtering-based suggestion engine 120 may generate collaborative filtering-based suggestions as discussed throughout. For example, the collaborative filtering-based suggestion engine 120 may utilize stored keywords and associated historical user interaction data to generate a set of collaborative filtering-based suggestions for the accessed keywords. These collaborative filtering-based suggestions may be stored, by the collaborative filtering-based suggestion engine 120 in the suggestion repository 150 in association with the accessed keyword.

The embedding-based suggestion engine 130 may utilize the previous keywords, for example stored in the item listing database 170 to generate embedding-based suggestions as discussed throughout. For example, the embedding-based suggestion engine 130 may utilize a pre-trained, or may train a machine learning model to generate a high-dimensional vector for the accessed keyword. The high-dimensional vector may capture the contextual and semantic relationships between a plurality of keywords by storing each in relationship with one another within the high-dimensional vector space. Once generated, the embedding-based suggestion engine 130 may determine which other keywords stored within the high-dimensional-vector space are most similar to one another based on their proximity within that space. These most similar keywords may then be stored in the suggestion repository 150 in association with the accessed keyword. As such, the embedding-based suggestion engine 130 may generate and utilize the high-dimensional vector space proactively such that when a keyword is entered as part of a query, the suggestion output engine 160 may simply query the data structure of the suggestion repository 150 to output the embedding-based suggestions without querying the high-dimensional vector space at the time of the new query. That being said, embodiments contemplated herein can utilize the embedding-based suggestion engine 130 to query the high-dimensional vector space at the time of the new query. This may be relevant in situations in which there is not an identical or similar keyword currently stored in the suggestion repository 150. In such examples, the embedding-based suggestion engine 130 may generate an embedding for the new keyword and then determine the most similar keywords in the high-dimensional vector space in real-time or near real-time.

The language model-based suggestion engine 140 of the query suggestion engine 110 may generate language model-based suggestions for accessed keywords as discussed throughout. For example, the language model-based suggestion engine 140 may utilize a pre-trained machine learning model, or may train a machine learning model, to generate language model based suggestions. In embodiments, the language model-based suggestion engine 140 may utilize the accessed keyword, and potentially other contextual data, as part of a prompt to the machine learning model to generate semantically and contextually aware suggestions. These language model-based suggestions may be generated proactively without the need for a user to submit a new query, and generate language model-based suggestions for each keyword stored in the item listing database 170. Each of the collaborative filtering-based suggestions, embedding-based suggestions, and language model-based suggestions may be generated proactively, meaning based on stored data and not in response to a new query entered by a user.

In some aspects, the query suggestions may be generated at the time that a user enters a query. In additional or alternative embodiments, multiple collaborative filtering-based suggestions, multiple embedding-based suggestions, and multiple language model-based suggestions may be generated for each previously submitted keyword stored in association with the item listing databased 170. Once generated, they each may be stored within the suggestion repository. The suggestion output engine 160, may cause the display or transmission of any number of suggestions generated by the query suggestion engine 110 or stored in the suggestion repository 150. The suggestion output engine 160 may output the suggestions as displayed in FIG. 1B, or in any other form as part of a graphical user interface associated with an item listing system.

FIG. 2B is a flow diagram 200B for generating, querying, and outputting query suggestions, in accordance with aspects of the technology described herein. The technical solution of the query suggestion engine can be explained by way of steps and an example of generating and outputting suggestions for a particular search query.

### Step 202B - Access a first query keyword:

The query suggestion engine begins by accessing a query keyword. This query keyword could be stored as part of the aggregated data in the item listing database, or may just the text data associated with a previously submitted query keyword. In embodiments, the query suggestion engine may access this query keyword as part of a new query submitted by a user and generate suggestions in real-time. Or the query suggestion engine may access stored query keywords, this process may be repeated at regular intervals, or after a set number of new queries have been entered.

### Step 204B - Generate a collaborative filtering suggestion:

The collaborative filtering-based suggestion engine may utilize the query keyword accessed by the query suggestion engine, or may access the query keyword independently. Once accessed, the collaborative filtering suggestion engine may generate a collaborative filtering suggestion. The collaborative filtering engine may utilize historical user data associated with any number of keywords to determine trends based on previous user interactions. These collaborative filtering suggestions may be generated proactively or in real-time as new queries are received. Once generated, the collaborative filtering-based suggestion may be stored in a data structure such as the suggestion repository in association with the original keyword.

### Step 206B - Generate an embedding-based suggestion:

The embedding-based suggestion engine may utilize the accessed keyword to generate an embedding-based suggestion. As discussed throughout, this may be generated in real-time or proactively. The embedding-based suggestion engine may comprise a machine learning model that generates a high-vector representation of accessed query keywords. These high-vector representations capture the semantic and contextual relationships between terms such that the embedding-based suggestion engine may query the high-dimensional-vector space to determine which keywords are most related. Once determined, they may be stored in a data structure in association with the accessed keyword.

### Step 208B - Generate a language model-based suggestion:

The language model-based suggestion engine may utilize the accessed keyword to generate a language model-based suggestion. This may be generated proactively or in real-time as new queries are received. The language model-based suggestion engine may incorporate a large language model to generate the language model-based suggestions. For example, the accessed keyword may be utilized as input to a large language model that is pre-trained on ecommerce data. In additional or alternative embodiments, additional context in the form of a prompt may be included as part of the input which may be utilized by the language model-based suggestion engine to generate the language model-based suggestion. Once generated, the language model-based suggestion may be stored in a data structure in association with the accessed keyword.

Step 210B - Store each of the collaborative filtering suggestion, embedding-based suggestion, and language model-based suggestion in a data structure in association with the query keyword:
As discussed throughout, each suggestion may be stored in association with the accessed keyword. Any number of suggestions may be generated for each accessed keyword and stored in a manner that each suggestion or a specific set of suggestions may be output to a graphical user interface. By storing each generated suggestion proactively in a data structure that may be easily accessed, a robust set of suggestions may be output in an efficient and timely manner when a user submits a new query containing a keyword that is currently stored in the data structure.

### Step 212B - Accessing a second query keyword:

In embodiments, the second query keyword may be accessed as part of a new query being submitted by a user for example through the query suggestions client.

### Step 214B - Determine whether the second keyword is stored within the data structure:

As the new query is being submitted by a user, the query suggestion engine may assess each keyword of the new query to determine if that new keyword is currently stored within the suggestion repository data structure. Depending on whether or not the second query keyword is currently stored within the data structure, the query suggestion engine may take two sets of actions.

### Step 216B - Query the data structure to determine the collaborative filtering suggestion, embedding-based suggestion, and the language model-based suggestion from the second keyword:

In an embodiment in which the second keyword is determined to be stored in the data structure, no additional actions need to be taken. The query suggestion engine may determine which of the collaborative filtering suggestions, embedding-based suggestions, and language model-based suggestions are to be output as the new query keyword is being entered without needing to generate them in real-time.

### Step 218B - Output the collaborative filtering suggestion, embedding-based suggestion, and language model-based suggestion for the second keyword:

The query suggestion engine may output each of the collaborative filtering suggestion, embedding-based suggestion, and language model-based suggestion to a user device in a manner that may be utilized by a user in the creation of their query. In embodiments, these suggestions may be output in a manner that a user may select one of the suggestions. Based on selecting the suggestion, they may be automatically incorporated into the query as part of the query.

### Step 220B - Generate a hash of the second keyword:

If the second keyword is not determined to be stored within the data structure, the query suggestion engine may generate a hash of the second keyword and utilize this hash to determine a currently stored keyword that is most similar. As part of the original suggestion generation process, the query suggestion engine may generate and store a hash for each accessed keyword such that real-time hashes may be generated for new query keywords that are not stored in the data structure. In embodiments, the hash may be generated in a manner similar to the process used to generate the embedding-based suggestions.

### Step 222B - Comparing the hash of the second keyword against hashes corresponding to the keywords stored on the data structure:

The newly generated hash may then be compared to hashes for the keywords currently stored on the data structure. This allows the query suggestion engine to dynamically determine and output suggestions even in embodiments where an identical keyword is not currently stored on the data structure.

### Step 224B - Determining a keyword most similar to the second keyword based on the hash:

Once the query suggestion engine has compared the newly generated hash against the hashes for keywords stored on the data structure, it may be determined that one or more keywords are most similar to the second keyword. In embodiments, the entire data structure may be queried to determine the most similar keyword. In additional or alternative embodiments, the data structure may be queried utilizing a threshold requirement for similarity. Once a keyword that meets the threshold requirement is found, the found keyword may be utilized to output the related suggestions.

### Step 226B - Output the collaborative filtering suggestion, embedding-based suggestion, and language model-based suggestion for the keyword determined to be the most similar to the second keyword:

Once the most similar or threshold similar suggestion has been determined by the query suggestion engine, query suggestions associated with the determined keyword may be output by the query suggestion engine. As such, without having the second keyword stored within the data structure, the query suggestion engine may still output any number of collaborative filtering, embedding-based and language model-based suggestions.

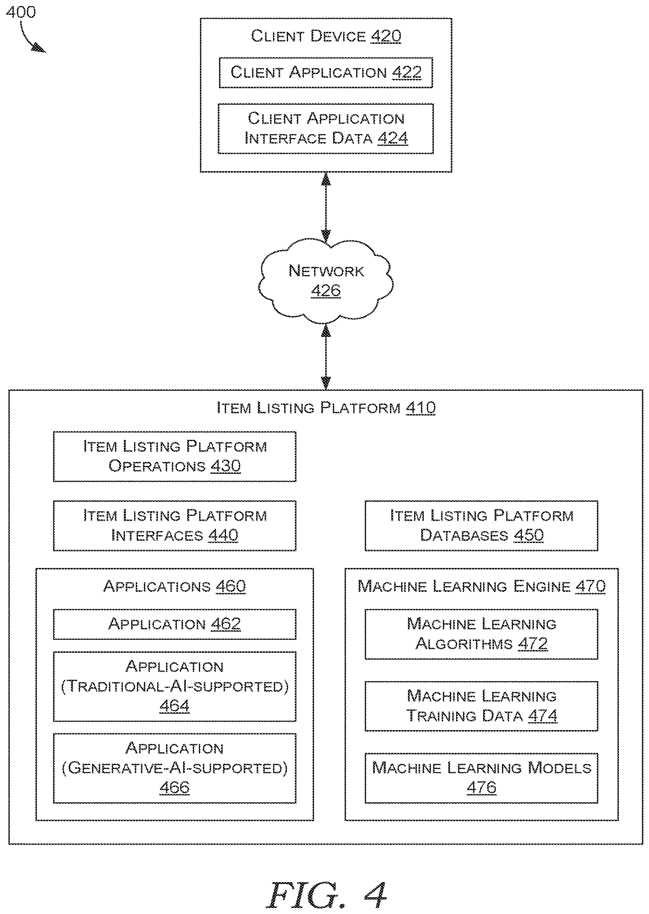

Aspects of the technical solution can be described by way of examples and with reference to FIGS. 1A, 1B, 2A, and 2B. FIG. 2A is a block diagram of an exemplary technical solution environment, based on example environments described with reference to FIGS. 4, 5, and 6 for use in implementing embodiments of the technical solution are shown. Generally the technical solution environment includes a technical solution system suitable for providing the example item listing system 400 in which methods of the present disclosure may be employed. In particular, FIG 2A shows a high-level architecture of the query suggestion system 100 in accordance with implementations of the present disclosure. Among other engines, managers, generators, selectors, or components not shown (collectively referred to herein as "components"), the query suggestion system 100 of FIG. 2A support functionality described in FIGS. 1A and 1B.

### Example Methods

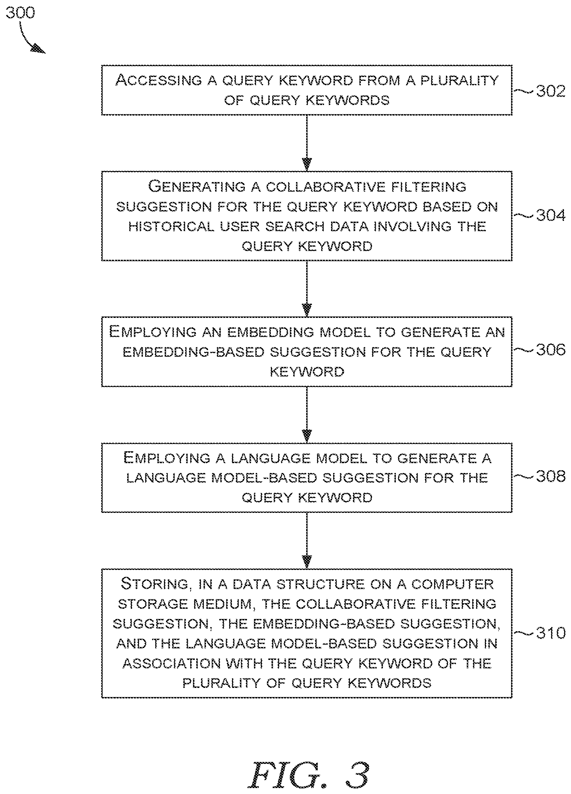

With reference to FIG. 3, a flow diagram that illustrates a method for generating and storing query suggestions, in accordance with aspects of the technology described herein. The methods may be performed using the artificial intelligence and query suggestion system described herein. In embodiments, one or more computer-storage media having computer-executable or computer-useable instructions embodied thereon that, when executed, by one or more processors can cause the one or more processors to perform the methods (e.g., computer-implemented method) in an artificial intelligence system (e.g., computerized system or computer system).

Turning to FIG. 3, a flow diagram is provided that illustrates a method 300 for generating and storing query suggestions. At block 302 the method 300 comprises accessing a query keyword from a plurality of query keywords. In embodiments, the query keyword comprises context for a prompt provided to the language model instructing the language model to generate a set of query suggestions for the query keyword.

At block 304, the method 300 comprises generating a collaborative filtering suggestion for the query keyword based on historical user search data involving the query keyword.

At block 306, the method 300 comprises employing an embedding model to generate an embedding-based suggestion for the query keyword. In embodiments, generating the embedding-based suggestion for the query keyword comprises generating, using the embedding model, a keyword embedding for each of the plurality of query keywords to provide a plurality of keyword embeddings including a first keyword embedding for the query keyword. A similar query keyword for the query keyword is identified from the plurality of query keywords based on the first keyword embedding and a second keyword embedding for the similar query keyword. The similar query keyword is provided as the embedding-based suggestion.

At block 308, the method 300 comprises employing a language model to generate a language model-based suggestion for the query keyword. In embodiments, generating the language model-based suggestion for the query keyword comprises providing the query keyword as an input to the language model. Based on providing the query keyword as the input to the language model, output from the language model is provided as the language model-based suggestion.

At block 310, the method 300 comprises storing, in a data structure on a computer storage medium, the collaborative filtering suggestion, the embedding-based suggestion, and the language model-based suggestion in association with the query keyword of the plurality of query keywords. In embodiments, the method further comprises accessing a query comprising a new query keyword, determining that the new query keyword does not match any of the plurality of query keywords. Based on this determination, it is determined that the query keyword is a closest match for the new query keyword. The collaborative filtering suggestion, the embedding-based suggestion, and the language model-based suggestion is communicated as query suggestions for the new query keyword. The query keyword may be determined as the closest match for the new query keyword based on a hash comparison of a first hash for the query keyword and a second hash for the new query keyword.

In embodiments, the method further comprises accessing a query comprising a reused query keyword, and determining that the reused keyword matches the query keyword. Responsive to determining that the reused query keyword matches the query keyword, the collaborative filtering suggestion, the embedding-based suggestion, and the language model-based suggestion is communicated as query suggestions for the reused query keyword.

### TECHNICAL IMPROVEMENT

Embodiments of the present technology have been described with reference to several inventive features (e.g., operations, systems, engines, and components) associated with an item listing system. Inventive features described include: operations, interfaces, data structures, and arrangements of computing resources associated with providing the functionality described herein relative with reference to a query suggestion engine associated with a query suggestion system.

Embodiments of the present technology relate to the field of computing, and more particularly to a query suggestion system and item listing system. The following described exemplary embodiments provide a system, method, and program product to, among other things, generate, store, and output multiple forms of search query suggestions. These search query suggestions are generated using three distinct engines, the collaborative filtering-based suggestion engine, embedding-based suggestion engine 130 and language model-based suggestion engine using techniques and machine learning models as discussed throughout. These suggestions are stored in a manner that they may be retrieved based on future query results without requiring that they be generated in real time as the queries are input by a user. Therefore, the present embodiments improve the technical field of search engine systems and item listing systems enhancing the efficiency of search engine suggestion generation. In addition to this, the generation and provision of these robust and various query suggestions reduce the number of faulty or unsuccessful search queries which reduces the search load on the item listing system. This provides for an improvement to technology by reducing the cost for software and hardware resources while reducing the bandwidth required to provide such robust and varied suggestions. Functionality of the embodiments of the present technology have further been described, by way of an implementation and anecdotal examples - to demonstrate that the operations for generating and storing of search query suggestions based on the three engines discussed herein as a solution to a specific problem in query processing and bandwidth maintenance to improve computing operations in search engine and item listing systems. Overall, these improvements result in less CPU computation, smaller memory requirements, and increased flexibility in search engine systems and item listing systems when compared to previous conventional search engine system and item listing system operations performed for similar functionality.

### ADDITIONAL SUPPORT FOR DETAILED DESCRIPTION OF THE TECHNOLOGY

### Example Item Listing System Environment

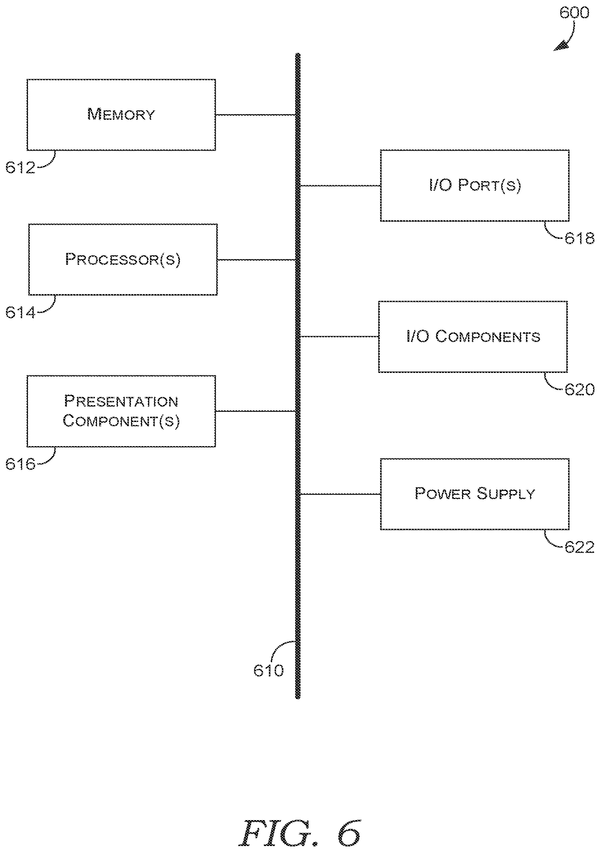

Referring now to FIG. 4, FIG. 4 illustrates an example item listing system 400 computing environment in which implementations of the present disclosure may be employed. In particular, FIG. 6 shows a high-level architecture of an example item listing platform 410 that can host a technical solution environment, or a portion thereof. It should be understood that this and other arrangements described herein are set forth as examples. For example, as described above, many elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

The item listing system 400 can be a cloud computing environment that provides computing resources for functionality associated with the item listing platform 410. For example, the item listing system 400 supports delivery of computing components and services - including servers, storage, databases, networking, applications, and machine learning associated with the item listing platform 410 and client device 420. A plurality of client devices (e.g., client device 420) include hardware or software that access resources on the item listing system 400. Client device 420 can include an application (e.g., client application 422) and interface data (e.g., client application interface data 424) that support client-side functionality associated with the item listing system. The plurality of client devices can access computing components of the item listing system 400 via a network (e.g., network 426) to perform computing operations.

The item listing platform 410 is responsible for providing a computing environment or architecture that includes the infrastructure that supports providing item listing platform functionality (e.g., e-commerce functionality). The item listing platform support storing item in item databases and providing a search system for receiving queries and identifying search results based on the queries. The item listing platform may also provide a computing environment with features for managing, selling, buying, and recommending different types of items. Item listing platform 410 can specifically be for a content platform such as EBAY content platform or e-commerce platform, developed by EBAY INC., of San Jose, California.

The item listing platform 410 can provide item listing platform operations 430 and item listing interfaces 440. The item listing platform operations 430 can include service operations, communication operations, resource management operations, security operations, and fault tolerance operations that support specific tasks or functions in the item listing platform 410. The item listing interfaces 440 can include service interfaces, communication interfaces, resource interfaces, security interfaces, and management and monitoring interfaces that support functionality between the item listing platform components. The item listing platform operations 430 and item listing interfaces 440 can enable communication, coordination and seamless functioning of the item listing system 400.

By way of example, functionality associated with item listing platform 410 can include shopping operations (e.g., product search and browsing, product selection and shopping cart, checkout and payment, and order tracking); user account operations (e.g., user registration and authentication, and user profiles); seller and product management operations (e.g., seller registration and product listing and inventory management); payment and financial operations (e.g., payment processing, refunds and returns); order fulfillment operations (e.g., order processing and fulfillment and inventory management); customer support and communication interfaces (e.g., customer support chat/email and notifications); security and privacy interfaces (e.g., authentication and authorization, payment security); recommendation and personalization interfaces (e.g., product recommendations and customer reviews and ratings); analytics and report interfaces (e.g., sales and inventory reports, and user behavior analytics); and APIs and Integration Interfaces (e.g., APIs for Third-Party Integration).

The item listing platform 410 can provide item listing platform databases (e.g., item listing platform databases 450) to manage and store different types of data efficiently. The item listing platform databases 450 can include relational databases, NoSQL databases, search databases, cache databases, content management systems, analytics databases, payment gateway database, customer relationship management databases, log and error databases, inventory and supply chain databases, and multi-channel databases that are used in combination to efficiently manage data and provide e-commerce experience for users.

The item listing platform 410 supports applications (e.g., applications 460) that is a computer program or software component or service that serves a specific function or set of functions to fulfil a particular item listing platform requirement or user requirement. Applications can be client-side (user-facing) and server-side (backend). Applications can also include application without any AI support (e.g., application 462) application supported by traditional AI model (e.g., application 464), and applications supported by generative AI models (e.g., application 466). By way of example, applications can include an online storefront application, mobile shopping app, admin and management console, payment gateway integration, user account and authentication application, search and recommendation engines, inventory and stock management application, order processing and fulfillment application, customer support and communication tools, content management system, analytics and report applications, marketing and promotion applications, multi-channel integration applications, log and error tracking applications, customer relationship management (CRM) applications, security applications, and APIs and web services that are used in combination to efficiently deliver e-commerce experiences for users.

The items listing platform 410 can include a machine learning engine (e.g., machine learning engine 470). The machine learning engine 470 refers to machine learning framework or machine learning platform that provides the infrastructure and tools to design, train, evaluate, and deploy machine learning models. The machine learning engine 470 can serve as the backbone for developing and deploying machine learning applications and solutions. Machine learning engine 470 can also provide tools for visualizing data and model results, as well as interpreting model decisions to gain insights into how the model is making predictions.

The machine learning engine 470 can provide the necessary libraries, algorithms, and utilities to perform various tasks within the machine learning workflow. The machine learning workflow can include data processing, model selection, model training, model evaluation, hyperparameter tuning, scalability, model deployment, inference, integration, customization, data visualization. Machine learning engine 470 can include pre-trained models for various tasks, simplifying the development process. In this way, the machine learning engine 470 can streamline the entire machine learning process, from data preparation and model training to deployment and inference, making it accessible and efficient for different types of users (e.g., customers, data scientists, machine learning engineers, and developers) working on a wide range of machine learning applications.

Machine learning engine 470 can be implemented in the item listing system 400 as a component that leverages machine learning algorithms and techniques (e.g., machine learning algorithms 472) to enhance various aspects of the secure vault engine functionality. Machine learning engine 470 can provide a selection of machine learning algorithms and techniques used to teach computers to learn from data and make predictions or decisions without being explicitly programmed. These techniques are widely used in various applications across different industries, and can include the following examples: supervised learning (e.g., linear regression: classification, support vector machines (SVM); unsupervised learning (e.g., clustering, principal component analysis (PCA), association rules (e.g., apriori); reinforcement learning (e.g., Q-Learning, deep Q-Network (DQN); and deep learning (e.g., neural networks, convolutional neural networks (CNN), and recurrent neural networks (RNN); and ensemble learning random forest.

Machine learning training data 474 supports the process of building, training, and fine-tuning machine learning models. Machine learning training data 474 consists of a labeled dataset that is used to teach a machine learning model to recognize patterns, make predictions, or perform specific tasks. Training data typically comprises two main components: input feature (X) and labels or target values (Y). Input features can include variables, attributes, or characteristics used as input to the machine learning model. Input features (X) can be numeric, categorical, or even textual, depending on the nature of the problem. For example, in a model for predicting house prices, input features might include the number of bedrooms, square footage, neighborhood, and so on. Labels or target values (Y) include the values that the model aims to predict or classify. Labels represent the desired output or the ground truth for each corresponding set of input features. For instance, in a spam email classifier, the labels would indicate whether each email is spam or not (i.e., binary classification). The training process involves presenting the model with the training data, and the model learns to make predictions or decisions by identifying patterns and relationships between the input features (X) and the target values (Y). A machine learning algorithm adjusts its internal parameters during training in order to minimize the difference between its predictions and the actual labels in the training data. Machine learning engine 470 can use historical and real-time data to train models and make predictions, continually improving performance and user experience.

Machine learning engine 470 can include machine learning models (e.g., machine learning models 476) generated using the machine learning engine workflow. Machine learning models 476 can include generative AI models and traditional AI models that can both be employed in the item listing system 400. Generative AI models are designed to generate new data, often in the form of text, images, or other media, based on patterns and knowledge learned from existing data. Generative AI models can be employed in various ways including content generation, product image generation, personalized product recommendations, natural language chatbots, and content summarization. Traditional AI models encompass a wide range of algorithms and techniques and can be employed in various ways including recommendation systems, predictive analytics, search algorithms, fraud detection, customer segmentation, image classification, Natural Language Processing (NLP) and A/B testing and optimization. In many cases, a combination of both generative and traditional AI models can be employed to provide a well-rounded and effective e-commerce experience, combining data-driven insights and creativity.

Machine learning engine 470 can be used to analyze data, make predictions, and automate processes to provide a more personalized and efficient shopping experience for users. By way of example, product recommendations search and filtering: pricing optimization, inventory and stock management: customer segmentation, churn prediction and retention, fraud detection, sentiment analysis, customer support and chatbots, image and video analysis, and ad targeting and marketing. The specific applications of machine learning within the item listing platform 410 can vary depending on the specific goals, available data, and resources.

### Example Distributed Computing System Environment

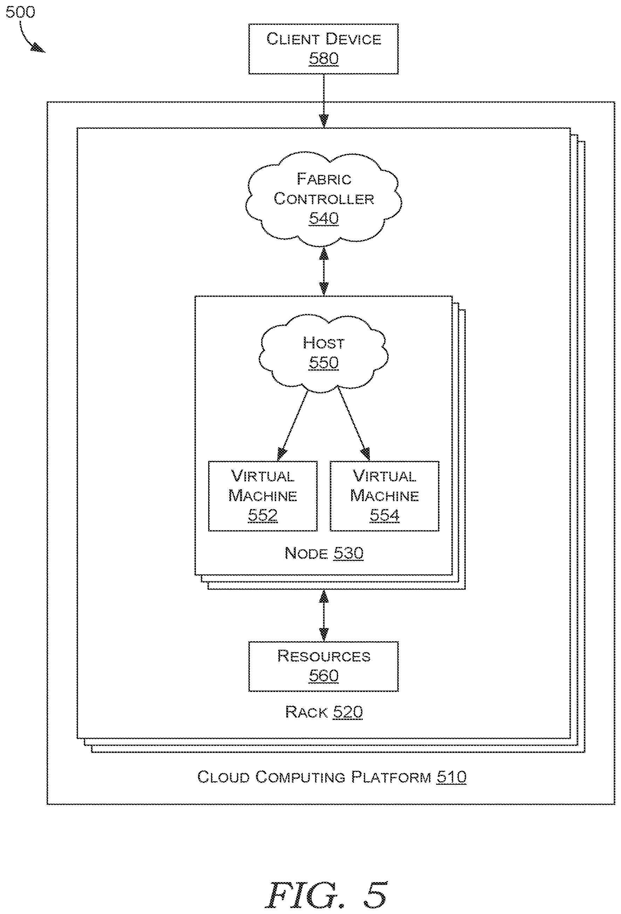

Referring now to FIG. 5, FIG. 5 illustrates an example distributed computing environment 500 in which implementations of the present disclosure may be employed. In particular, FIG. 5 shows a high-level architecture of an example cloud computing platform 510 that can host a technical solution environment, or a portion thereof (e.g., a data trustee environment). It should be understood that this and other arrangements described herein are set forth only as examples. For example, as described above, many of the elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

Data centers can support distributed computing environment 500 that includes cloud computing platform 510, rack 520, and node 530 (e.g., computing devices, processing units, or blades) in rack 520. The technical solution environment can be implemented with cloud computing platform 510 that runs cloud services across different data centers and geographic regions. Cloud computing platform 510 can implement fabric controller 540 component for provisioning and managing resource allocation, deployment, upgrade, and management of cloud services. Typically, cloud computing platform 510 acts to store data or run service applications in a distributed manner. Cloud computing platform 510 in a data center can be configured to host and support operation of endpoints of a particular service application. Cloud computing platform 510 may be a public cloud, a private cloud, or a dedicated cloud.

Node 530 can be provisioned with host 550 (e.g., operating system or runtime environment) running a defined software stack on node 530. Node 530 can also be configured to perform specialized functionality (e.g., compute nodes or storage nodes) within cloud computing platform 510. Node 530 is allocated to run one or more portions of a service application of a tenant. A tenant can refer to a customer utilizing resources of cloud computing platform 510. Service application components of cloud computing platform 510 that support a particular tenant can be referred to as a multi-tenant infrastructure or tenancy. The terms service application, application, or service are used interchangeably herein and broadly refer to any software, or portions of software, that run on top of, or access storage and compute device locations within, a datacenter.

When more than one separate service application is being supported by nodes 530, nodes 530 may be partitioned into virtual machines (e.g., virtual machine 552 and virtual machine 554). Physical machines can also concurrently run separate service applications. The virtual machines or physical machines can be configured as individualized computing environments that are supported by resources 560 (e.g., hardware resources and software resources) in cloud computing platform 510. It is contemplated that resources can be configured for specific service applications. Further, each service application may be divided into functional portions such that each functional portion is able to run on a separate virtual machine. In cloud computing platform 510, multiple servers may be used to run service applications and perform data storage operations in a cluster. In particular, the servers may perform data operations independently but exposed as a single device referred to as a cluster. Each server in the cluster can be implemented as a node.

Client device 580 may be linked to a service application in cloud computing platform 510. Client device 580 may be any type of computing device, which may correspond to computing device 600 described with reference to FIG. 5, for example, client device 580 can be configured to issue commands to cloud computing platform 510. In embodiments, client device 580 may communicate with service applications through a virtual Internet Protocol (IP) and load balancer or other means that direct communication requests to designated endpoints in cloud computing platform 510. The components of cloud computing platform 510 may communicate with each other over a network (not shown), which may include, without limitation, one or more local area networks (LANs) and/or wide area networks (WANs).

### Example Computing Environment

Having briefly described an overview of embodiments of the present technology, an example operating environment in which embodiments of the present technology may be implemented is described below in order to provide a general context for various aspects of the present technology. Referring initially to FIG. 6 in particular, an example operating environment for implementing embodiments of the present technology is shown and designated generally as computing device 600. Computing device 600 is but one example of a suitable computing environment and is not intended to suggest any limitation as to the scope of use or functionality of the technology. Neither should computing device 600 be interpreted as having any dependency or requirement relating to any one or combination of components illustrated.

The technology may be described in the general context of computer code or machine-useable instructions, including computer-executable instructions such as program modules, being executed by a computer or other machine, such as a personal data assistant or other handheld device. Generally, program modules including routines, programs, objects, components, data structures, etc. refer to code that perform tasks or implement particular abstract data types. The technology may be practiced in a variety of system configurations, including hand-held devices, consumer electronics, general-purpose computers, more specialty computing devices, etc. The technology may also be practiced in distributed computing environments where tasks are performed by remote-processing devices that are linked through a communications network.

With reference to FIG. 6, computing device 600 includes bus 610 that directly or indirectly couples the following devices: memory 612, one or more processors 614, one or more presentation components 616, input/output ports 618, input/output components 620, and illustrative power supply 622. Bus 610 represents what may be one or more buses (such as an address bus, data bus, or combination thereof). The various blocks of FIG. 6 are shown with lines for the sake of conceptual clarity, and other arrangements of the described components and/or component functionality are also contemplated. For example, one may consider a presentation component such as a display device to be an I/O component. Also, processors have memory. We recognize that such is the nature of the art and reiterate that the diagram of FIG. 6 is merely illustrative of an example computing device that can be used in connection with one or more embodiments of the present technology. Distinction is not made between such categories as "workstation," "server," "laptop," "hand-held device," etc., as all are contemplated within the scope of FIG. 6 and reference to "computing device."

Computing device 600 typically includes a variety of computer-readable media. Computer-readable media can be any available media that can be accessed by computing device 600 and includes both volatile and nonvolatile media, removable and non-removable media. By way of example, and not limitation, computer-readable media may comprise computer storage media and communication media.

Computer storage media include volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 600. Computer storage media excludes signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 612 includes computer storage media in the form of volatile and/or nonvolatile memory. The memory may be removable, non-removable, or a combination thereof. Exemplary hardware devices include solid-state memory, hard drives, optical-disc drives, etc. Computing device 600 includes one or more processors that read data from various entities such as memory 612 or I/O components 620. Presentation component(s) 616 present data indications to a user or other device. Exemplary presentation components include a display device, speaker, printing component, vibrating component, etc.

I/O ports 618 allow computing device 600 to be logically coupled to other devices including I/O components 620, some of which may be built in. Illustrative components include a microphone, joystick, game pad, satellite dish, scanner, printer, wireless device, etc.

### Additional Structural and Functional Features of Embodiments of the Technical Solution

Having identified various components utilized herein, it should be understood that any number of components and arrangements may be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, and/or software, as described below. For instance, various functions may be carried out by a processor executing instructions stored in memory. As such, other arrangements and elements (e.g., machines, interfaces, functions, orders, and groupings of functions) can be used in addition to or instead of those shown.

Embodiments described in the paragraphs below may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of embodiments of the technology is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

For purposes of this disclosure, the word "including" has the same broad meaning as the word "comprising," and the word "accessing" comprises "receiving," "referencing," or "retrieving." Further the word "communicating" has the same broad meaning as the word "receiving," or "transmitting" facilitated by software or hardware-based buses, receivers, or transmitters using communication media described herein. In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (a or b thus includes either a or b, as well as a and b).

For purposes of a detailed discussion above, embodiments of the present technology are described with reference to a distributed computing environment; however the distributed computing environment depicted herein is merely exemplary. Components can be configured for performing novel aspects of embodiments, where the term "configured for" can refer to "programmed to" perform particular tasks or implement particular abstract data types using code. Further, while embodiments of the present technology may generally refer to the technical solution environment and the schematics described herein, it is understood that the techniques described may be extended to other implementation contexts.

Embodiments of the present technology have been described in relation to particular embodiments which are intended in all respects to be illustrative rather than restrictive. Alternative embodiments will become apparent to those of ordinary skill in the art to which the present technology pertains without departing from its scope.

From the foregoing, it will be seen that this technology is one well adapted to attain all the ends and objects hereinabove set forth together with other advantages which are obvious, and which are inherent to the structure.

It will be understood that certain features and sub-combinations are of utility and may be employed without reference to other features or sub-combinations. This is contemplated by and is within the scope of the claims.

## Claims

1. A computerized system comprising:
one or more computer processors; and
computer memory storing computer-useable instructions that, when used by the one or more computer processors, cause the one or more computer processors to perform operations, the operations comprising:
accessing a query keyword from a plurality of query keywords;
generating a collaborative filtering suggestion for the query keyword based on historical user search data involving the query keyword;
employing an embedding model to generate an embedding-based suggestion for the query keyword;
employing a language model to generate a language model-based suggestion for the query keyword; and
storing, in a data structure on a computer storage medium, the collaborative filtering suggestion, the embedding-based suggestion, and the language model-based suggestion in association with the query keyword of the plurality of query keywords.

2. The system of claim 1, wherein generating the embedding-based suggestion for the query keyword comprises:
generating, using the embedding model, a keyword embedding for each of the plurality of query keywords to provide a plurality of keyword embeddings including a first keyword embedding for the query keyword;
identifying, from the plurality of query keywords, a similar query keyword for the query keyword based on the first keyword embedding and a second keyword embedding for the similar query keyword; and
providing the similar query keyword as the embedding-based suggestion.

3. The system of claim 1 or 2, wherein generating the language model-based suggestion for the query keyword comprises:
providing the query keyword as an input to the language model; and
based on providing the query keyword as the input to the language model, providing output from the language model as the language model-based suggestion.

4. The system of claim 3, wherein the query keyword comprises context for a prompt provided to the language model instructing the language model to generate a set of query suggestions for the query keyword.

5. The system of any one of the preceding claims, wherein the operations further comprise:
accessing a query comprising a new query keyword;
determining that the new query keyword does not match any of the plurality of query keywords;
based on determining that the new query keyword does not match any of the plurality of query keywords, determining the query keyword as a closest match for the new query keyword; and
communicating the collaborative filtering suggestion, the embedding-based suggestion, and the language model-based suggestion as query suggestions for the new query keyword.

6. The system of claim 5, wherein the query keyword is determined as the closest match for the new query keyword by a hash comparison of a first hash for the query keyword and a second hash for the new query keyword.

7. The system of any one of the preceding claims, wherein the operation further comprises:
accessing a query comprising a reused query keyword;
determining that the reused query keyword matches the query keyword; and
responsive to determining that the reused query keyword matches the query keyword, communicating the collaborative filtering suggestion, the embedding-based suggestion, and the language model-based suggestion as query suggestions for the reused query keyword.

8. A computer-implemented method, the computer-implemented method comprising:
accessing a query keyword from a plurality of query keywords;
generating a collaborative filtering suggestion for the query keyword based on historical user search data involving the query keyword;
employing an embedding model to generate an embedding-based suggestion for the query keyword;
employing a language model to generate a language model-based suggestion for the query keyword; and
storing, in a data structure on a computer storage medium, the collaborative filtering suggestion, the embedding-based suggestion, and the language model-based suggestion in association with the query keyword of the plurality of query keywords.

9. The computer-implemented method of claim 8, wherein the method further comprises:
generating, using the embedding model, a keyword embedding for each of the plurality of query keywords to provide a plurality of keyword embeddings including a first keyword embedding for the query keyword;
identifying, from the plurality of query keywords, a similar query keyword for the query keyword based on the first keyword embedding and a second keyword embedding for the similar query keyword; and
providing the similar query keyword as the embedding-based suggestion.

10. The computer-implemented method of claim 8 or 9, wherein generating the language model-based suggestion for the query keyword comprises:
providing the query keyword as an input to the language model; and
based on providing the query keyword as the input to the language model, providing output from the language model as the language model-based suggestion.

11. The computer implemented method of claim 10, wherein the query keyword comprises context for a prompt provided to the language model instructing the language model to generate a set of query suggestions for the query keyword.

12. The computer-implemented method of any one of claims 8 to 11, wherein the method further comprises:
accessing a query comprising a new query keyword;
determining that the new query keyword does not match any of the plurality of query keywords;
based on determining that the new query keyword does not match any of the plurality of query keywords, determining the query keyword as a closest match for the new query keyword; and
communicating the collaborative filtering suggestion, the embedding-based suggestion, and the language model-based suggestion as query suggestions for the new query keyword.

13. The computer-implemented method of claim 12, wherein the query keyword is determined as the closest match for the new query keyword by a hash comparison of a first hash for the query keyword and a second hash for the new query keyword.

14. One or more computer-storage media having computer-executable instructions embodied thereon that, when executed by a computing system having a processor and memory, cause the processor to perform operations according to any one of claims 8 to 13.

15. The computer storage media of claim 14, wherein the operations further comprise:
accessing a query comprising a reused query keyword;
determining that the reused query keyword matches the query keyword; and
responsive to determining that the reused query keyword matches the query keyword, communicating the collaborative filtering suggestion, the embedding-based suggestion, and the language model-based suggestion as query suggestions for the reused query keyword.
